(19) Europäisches Patentamt
European Patent Office
Office européen des brevets

(11) **EP 1 860 425 A1**

(12) **EUROPEAN PATENT APPLICATION**

(43) Date of publication:
**28.11.2007 Bulletin 2007/48**

(51) Int Cl.:
***G01N 21/03*** (2006.01)     ***G01N 21/09*** (2006.01)

(21) Application number: **06010623.4**

(22) Date of filing: **23.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ETH Zürich**
**8092 Zürich (CH)**

(72) Inventors:
• **Sigirst, Markus**
  **8308 Illnau (CH)**
• **Bartlome, Richard**
  **8050 Zürich (CH)**
• **Baer, Marcel**
  **8047 Zürich (CH)**

(54) **High-Temperature multipass cell for absorbtion spectroscopy of gases and vapors at eleveated temperatures**

(57)     The invention is directed to a high-temperature multipass cell (1) which is suitable to be used in absorption spectroscopy under high temperature and different pressures. The high-temperature multipass cell (1) comprises compensating means (13, 16) to compensate thermal expansion,

The concept of the high-temperature multipass cell (1) according to the present invention enables sensitive spectral measurements on gases and vapors at adjustable temperatures in a wide temperature range between room temperature and high temperatures such as 450 °C. Furthermore, optical adjustments, e.g. in order to vary the length of the light path, are possible while the cell (1) is in operation. Once adjustments are made by the operator, thermal expansion is mechanically compensated.

Fig. 1

EP 1 860 425 A1

## Description

## BACKGROUND OF THE INVENTION

FIELD OF THE INVENTION

The invention lies in the field of absorption spectroscopy, in particular infrared spectroscopy of gases and vapors at high temperatures,

DESCRIPTION OF THE ART

Infrared spectroscopy is a subset of spectroscopy that deals with the infrared part of the electromagnetic spectrum, This covers a range of techniques, with the most common type being a form of absorption spectroscopy. As with all spectroscopic techniques, it can be used in analytical chemistry to identify a substance present in a sample.

In order to measure the sample, a beam of infrared light is directed through it, and the amount of energy absorbed at each wavelength is recorded. This may be done by scanning through the spectrum with a monochromatic beam, which changes in wavelength over time, or by using a Fourier transform instrument to measure all wavelengths at once. From this, an infrared absorbance spectrum may be plotted, which shows at which wavelengths the sample absorbs the infrared light Thereby it becomes possible to interpret the components present in the sample.

The Infrared Spectrum (IR spectrum) is a unique identification characteristic of molecules, for it does not only depend on the particular functional groups, but also reflects the arrangement of these functional groups within the molecule. In contrast to the spectra obtained by NMR or mass spectrometry, the IR spectrum is predominantly a property of the whole molecule rather than the sum of the properties of its constituents, Due to this ability to fingerprint molecular compounds, infrared spectroscopy has long been reported as the analytical technique with the highest selectivity,

IR spectra can be recorded in the vapor, liquid or solid phase. Vapor phase IR spectra in general offer advantages such as negligible scattering effects and sharper absorption features at reduced pressure.

Sensitive laser-based detection schemes for infrared spectroscopy such as photoacoustic, cavity ring down or multipass transmission have a long proven history for measurements in numerous gases. These detection schemes known from the prior art are, however, often not suitable for recording spectra in the vapor phase, particularly when high temperatures are involved. In a photoacoustic cell, the maximum permissible temperature is limited by the high-responsivity miniature microphones. In cavity ring down, thermal expansion of the cell and the dielectric layers of the high reflectivity mirrors make the scheme very sensitive to temperature changes. The usual requirement of a piezoelectric transducer in this scheme complicates also the design of a device that can withstand elevated temperatures. The mirrors are a weak point in multipass transmission cells too, Condensation on the optical surface must absolutely be avoided. Furthermore, thermal expansion may lead to fatal misalignments. As a result of these technical difficulties, infrared spectroscopy of condensed samples in the vapor phase is nowadays generally limited to using single pass heated gas cells. In its most simple design, a single pass cell consists of a tube sealed on both ends with light transmitting windows,

The sensitivity of detection of an absorbing sample present inside a cell increases as the length of the light path through the sample increases. In a singe pass cell, the absorption length of the light path is of the order of a few centimeters. Single pass cells are therefore 2 orders of magnitude less sensitive than multipass cells where the light is reflected back and forth a high number of times before exiting the cell again.

Subsequently several documents of the prior art are discussed in more detail.

US2004090628 describes an apparatus for mapping out a pollutant and its locality. The apparatus includes a cell where pollutants can be collected in an optical channel having multiple passes of radiation within the cell. The cell requires a valve acting like a vacuum for allowing pollutants in the atmosphere to be deposited in the cell for detection. A location sensor is provided for determining a location coordinate of the cell. The atmospheric pollutant detection system utilizes laser technology with a computer system, The optical scheme within the cell is capable of multiple passes of radiation in which the total length or radiation is multiple length of the cell. The multiple passes scheme conforms to Chernin's multipass matrix system which uses a matrix of mirrors to create multiple passages of radiation within a confined space.

CN1659428 discloses a method and a device for measuring a concentration of a preselected gas in a gas sample. The device comprises a Herriott type multipass cell having a center axle and a housing surrounding and spaced apart from the axle to provide a tubular sample cavity. The gas sample is pumped through the sample cavity via apertures provided in opposed ends of the axle. A first mirror and a second mirror are supported at opposed ends of the axle. A light source, e.g. a laser or LED, is provided for emitting a light beam into the sample cavity via en entry aperture in the first mirror, the light beam having a wave length at which the preselected gas strongly absorbs. The beam is reflected between the mirrors for a number of times before exiting the cell via an exit aperture in the second mirror and impinging the intensity of the unattenuated light beam and a detector for detecting the intensity of light transmitted through the second mirror after a single pass through the cell. The light source is operatively connected to a heat control assembly having a heat sink and the gas sample is passed through said heat sink to augment temperature control of the light source.

US2004004720 is directed to a metallic gas cell which includes a metallic casing with an input opening and an output opening, and an opening located there between, The metallic gas cell also includes input and output optical modules, each being respectively hermetically attached to one of the corresponding open ends. The metallic gas cell includes sealing means for sealing each of the optical modules in one of the corresponding open ends, thereby defining an airtight cavity in the casing when the opening is sealed. The metallic gas cell also includes an optical energy absorbing gas being enclosed within the cavity. The metallic gas cell is advantageously modular for allowing the use of various input or output modules such as windows, lenses, lasers, photodetectors, and fiber collimators.

WO9749983 discloses an apparatus for measuring of concentrations of gases within a high temperature gas composition. The apparatus includes an athermal optical multipass cell (e.g,, a Herriott cell), an optical device and a detector. The cell, which receives a high temperature gas composition, includes a mounting structure that supports a pair of concave mirrors oppositely disposed along a common axis and separated by a selected distance. One mirror includes an orifice through which an input beam of light from a light source enters the cell. The beam is repeatedly reflected between the mirrors before exiting the cell through the orifice as an output beam. The mounting structure supports the mirrors at the selected distance. The optical device is positioned to receive the output beam exiting the cell. The detector is optically coupled to the imaging device for receiving the output beam in order to measure concentrations of gases within the high temperature gas composition, The light source, the optical device and the detector can be thermally isolated from the high temperature gas composition disposed in the cell.

WO9749979 describes an apparatus comprising an extraction probe and a measurement chamber which is used to measure gas concentrations directly at the gas extraction site without diluting the sampled gases, while keeping the gas heated to a temperature above 500 °F. The probe is insertable into a stream of a high temperature gas composition and includes a tip section for receiving an extracted sample and a heated extraction section. The tip section includes a filter for removing particles from the sample. The heated measurement chamber is coupled to the proximal end of the probe for receiving the extracted sample from the heated extraction section. The heated measurement chamber includes a measurement device for measuring concentrations of gases within the sample. The measurement device can comprise an athermal optical multipass cell, e.g. a Herriot cell as known from the prior art.

US2003063284, respectively EP0768525, provide a chamber effluent monitoring system which comprises a chamber having an exhaust line connected thereto. The exhaust line includes a sample region, wherein substantially all of a chamber effluent also passes through the sample region. The system further comprises an absorption spectroscopy measurement system for detecting a gas phase molecular species. The measurement system comprises a light source and a main detector which is in optical communication with the sample region through one or more light transmissive window. The light source directs a light beam into the sample region through at least one light transmissive window. The light beam passes through the sample region and exits through another light transmissive window, whereby a main detector responds to the light beam exiting the sample region. The system allows for in situ measurement of molecular gas impurities in a chamber effluent, and in particular, in the effluent from a semiconductor processing chamber.

US5949537, respectively US6188475, provide an in-line cell for absorption spectroscopy which includes a sample region, a light entry port and a light exit port being the same or separate ports. Each port is in communication with the sample region and contains a light transmissive window, A mirror having a light reflective surface faces the sample region and a heater effective to heat the light reflective surface is provided, The heater is capable to heat the light reflective surface from 50 to about 150°C to minimize the adverse effect by deposits formed on the light reflective surface. No compensation of expansion is foreseen.

US5351120 discloses a spectrographic sample cell for the analysis of trace impurities in sample gases. The cell is provided with a gas inlet, a gas outlet and a volume for confining the sample gases for analysis. Two mirrors are provided, a first mirror proximate the gas inlet the second mirror proximate the gas outlet, the first mirror having a hole at its radial center. A conically shaped cell profile is further provided such that the formation of vortices of sample gas is prevented in the cell upstream of or in the region where the analysis of trace impurities is to take place.

US5303080 is directed to a beam scanning system that incorporates an actively controlled optical head, wherein a light beam source and collimating optics are mounted in an active, thermally compensated assembly. A collimating optics mount preferably in the form of a flexure plate having a three point elastic hinge is supported on a base plate by a respective number of equally spaced actuators. The motion of the flexure plate is thereby over constrained and allows the operation of the elastic hinge to benefit from elastic averaging such that motion of the flexure plate may be affected by the actuators individually or in combination. Controlled flexure plate motion may be implemented to compensate for thermal shifts in system focal length, while maintaining radial and angular alignment of the collimating optics relative to the beam source, according to the influence of the individual actuators. US5383168 is directed to the optical head as described in US503080.

US5291265 describes an off-axis cavity absorption cell with astigmatic mirrors. The cell design is based on a prototype design that yields a closed beam path having a desired geometry, but the mirrors are fabricated so that the ratios of their radii of curvature are actually larger than those calculated for the prototype. To achieve the desired closed beam path, the mirror spacing is adjusted from that of the prototype design, and the planes of their axes of greatest curvature are oriented out of the alignment that characterizes the prototype design. If the mirrors' manufacturing process yields errors in the curvature radius ratios within certain prescribed limits, a cell of this design can be adjusted to achieve the closed beam path by simply changing the mirror separation and the "twist angle" between their respective planes of maximum curvature radius.

US5306918 (WO9117429) describes an installation for the analysis or transformation of the surface of samples placed in a vacuum or controlled atmosphere, including a main enclosure in which a support plate is positioned for at least one device. The device is intended for the microscopy, spectroscopy or etching of the sample surface by scanning of the surface by the microprobe. The support plate can be rotated around a central axis allowing the use of a series of devices fitted into the periphery of the support plate.

US3711708 describes a rapid scan spectrum identifier for identifying an infrared spectrum of a gas chromatograph to identify the absorption characteristics. The device comprises an infrared source, a beam splitter, a double beam chopper for alternately sending the infrared beam through a sample or a reference gas cell mounted in a suitable furnace. The output is recombined and analyzed by a monochromator having a narrow output passband. The monochromator is of the scanning type in which a grating is synchronously scanned with a circular variable filter so that the first order output of the grating is selectively passed and higher orders rejected by the filter.

## SUMMARY OF THE INVENTION

As a technique with high sensitivity, the inventors have found that multipass transmission is the best way to conduct measurements in gases and vapors at elevated temperatures. One advantage is that this detection method does not require a powerful laser source as other methods from the prior art do, such as photoacoustic or, to a certain extent, cavity ring-down. Multipass transmission may even be implemented within a Fourier transform infrared spectrometer, which is a competitor for laser-based tunable infrared instruments. Due to the reason that condensation on the mirrors and windows and uncontrolled thermal expansion occur, a multipass cell is, in its original design as known from the prior art, not suitable to analyze gases and vapors at high temperatures,

It is therefore an object of the present invention to provide a multipass cell for IR spectroscopy which is suitable to analyze gazes and vapors at high temperatures.

It is a further object of the invention to provide a multipass cell with an operation temperature up to 450°C.

These problems are solved by the high-temperature multipass cell as defined in the annexed claims. Embodiments of the invention will be described in more detail subsequently.

The multipass cell according to the herein disclosed invention is a compact long path cell, which can withstand harsh environments such as given by aggressive chemicals in addition to high temperatures, e.g. up to 450 °C. It has been found that the heatable devices known from the prior art achieve only a sensitivity which is approximately two orders of magnitude lower than the high-temperature multipass cell according to the present invention.

In contrast to the prior art, a device according to the invention is designed to compensate thermal expansion by compensating means. An embodiment may comprise compensating means to compensate thermal expansion over a wide range. A high-temperature multipass cell according to the present invention is heatable and its parts are thermally interconnected such that no cold spots inside the vacuum components (test chamber) appear. Therefore, measurements on condensable vapors are possible, in addition to traditional measurements on gases. Optical adjustments of a high-temperature multipass cell according to the present invention, e.g, in order to vary the length of the light path, may be performed by the user under any thermal or vacuum condition without dismantling the cell. It has been found that heatable devices known from the prior art do not offer all these advantages.

An application of the high-temperature multipass cell according to the present invention will be explained subsequently in more detail by recording hot band spectra of methane and water vapor with the help of a mid-infrared laser source emitting between 3 $\mu$m and 4 $\mu$m.

A high-temperature multipass cell (HTMC) according to the present invention preferably has a modular setup and comprises in general a first and a second spherical or astigmatic mirror arranged coaxially to and facing each other. The first and the second mirrors are arranged in a vacuumable housing surrounding a vacuum test chamber. The first mirror is arranged fixed and the second mirror is arranged movable and tiltable with respect to the first mirror. In an embodiment of the invention, this is achieved by a two-part housing, whereby a first part of the housing, that carries on the inside the first mirror, is mounted at least at one end rigid on a support base, and a second part of the housing, that is arranged movable and tiltable on the support base, holds the second mirror on the inside. While the mirrors and the housing are preferably arranged thermally insulated with respect to the support base, the mirrors and the housing are thermally interconnected to each other such that no cold spots occur where condensation/disposal of material may take place. Thereby disadvantageous temperature distribution, cooling of the mirrors and uncontrolled thermal expansion can be avoided. Due to the thermal decoupling of the mirrors and the housing from the support base by insulating means, thermal expansion can be compensated during operation at high temperatures.

In an embodiment the first part of the housing has an in general tubular shape, whereby the first end is arranged rigidly on a base plate and the other end is arranged linear displaceable with respect to the first end in the direction of the tube axis (x-axis) to compensate thermal expansion. Inside the tubular shape of the first part of the housing the first mirror is arranged directing inside the tubular shape. At the opposite end, the tubular shape of the first part of the housing is interconnected by a coupling means to the second part of the housing, which carries the second mirror arranged in general opposite to the first mirror. Both mirrors are thermally interconnected to the housing and the other surrounding parts, such that no negative cold spot can occur. The coupling means between the first and the second part of the housing is made such that it does not hinder the relative movement (e.g. thermal expansion and, or adjustment) of the second part of the housing with respect to the first part of the housing. Good results have been achieved by a flexible bellows, which is capable to withstand vacuum on the inside of the housing. The bellows preferably is ring-shaped and is made out of sheet metal, e.g. steel or titan or another suitable material. By a ring-shaped bellows a high mechanical strength in radial direction is achieved and it is thereby avoided that the bellows deforms inwardly when a vacuum is applied. The second part of the housing and the movable mirror are arranged such that they can be tilted and/or translated with respect to and in the x-, y- or z-direction without dismantling the high-temperature multipass cell. Thereby it becomes possible to adjust the mirrors with respect to each other to compensate thermal deformation of the housing and the mirrors when the high-temperature multipass cell is in operation.

The housing may further comprise a viewport to view and control the inside, at least one coupling window and, if appropriate, fittings and electric feedthroughs. In an embodiment the housing is equipped with a vessel to insert a sample into the test chamber of the housing.

To avoid condensation of vaporized material on the mirrors, at least one mirror may be heated separately, e.g. by a cable heater or another suitable heating means, which is thermally interconnected to at least one mirror. Thereby it becomes possible to maintain at least one mirror at a higher temperature, e.g. in order to prevent negative cold spots and condensation on the optical surface of the mirror: Depending on the field of application different mirror materials may be used. Good results have been achieved by mirrors which are made out of synthetic fused silica or metal such as invar. Advantages of synthetic fused silica are the high softening point, the good chemical resistance and the comparable low thermal expansion. Low thermal expansion is advantageous because alignment of the mirrors depends also on the radius of curvature of the mirror.

In an embodiment of the high-temperature multipass cell, the second mirror is interconnected directly or indirectly to a movable tilt table, which is tiltable around at least one axis. In an embodiment the tilt table comprises a first tilt plate arranged non-tiltable and a second adjustable tilt plate, which can be inclined with respect to the first tilt plate around the y- and the z-axis. If appropriate a rotation around the x-axis may be foreseen. The first and the second tilt plate each comprise a groove, which is arranged in general coaxially and opposite to each other. In these grooves a sphere made out of a rigid material is arranged and acts as a bearing support of the second tilt plate with respect to the first tilt plate. The second tilt plate is pressed against the sphere and the first tilt plate by three set screws arranged in general equidistant to the sphere and 120° spaced apart with respect to each other. The axes of the set screws are arranged in general perpendicular to the first tilt plate. The tilt table itself is arranged on a three axis linear table, which is mounted on the support base and which is adjustable in x-, y- and z-direction. Thereby it becomes possible to fully adjust the second mirror with respect to the support base and the first mirror,

The mirrors and the housing are preferably thermally insulated with respect to the support base, e.g. on the side of the second mirror a ceramic disk is arranged which thermally insulates the flange from the tilt table, allowing adjustments under different thermal conditions. In an embodiment the first and the second mirror are mechanically coupled to the rigid support base which is thermally insulated with respect to the mirrors and the housing. Thereby the distance between the mirrors does not change at different thermal conditions. The flexible bellows compensates thermal expansion occurring in the housing, once the distance between the two mirrors is set by the linear table. Furthermore, it enables one mirror to be tilted and translated under vacuum condition. If appropriate at least one viewport allows visible control on the optical surface of at least one mirror. This permits an easy alignment e.g. by observing a beam spot pattern of a visible laser. The optical measuring beam is coupled in and out of the high-temperature multipass cell through a coupling window, which is normally arranged behind the first mirror. To allow pass-through of the beam, the mirror comprises a pass-through opening aligned to the coupling window, As explained above, the first and the second mirror are arranged opposite to and facing each other, spaced apart along an optical axis (x-axis). The mirrors are shaped such that a measuring beam entering into the high-temperature multipass cell through the coupling window is reflected several times before it escapes from the inside of the cell through the same or a different coupling window. In the cell the beam is reflected by the mirrors such that it forms a fanfold path around the optical axis (x-axis) of the mirrors, With each reflection, the length of the optical path within the cell increases by an amount approximately equal to the distance between the two mirrors. Depending on the design, the arrangement of the mirrors and the angles of the entry beam, the number of reflections of the beam and the revolutions of the fanfold beam path can be adjusted, In that the beam is reflected more often, the likeliness of absorption by a specific chemical element, present in the test chamber and thereby the sensitivity are increased.

An embodiment of the high-temperature multipass cell according to the present invention has been characterized for different optical configurations, The performance has been investigated in a test environment containing methane and water vapor. The high-temperature multipass cell was setup such that spherical mirrors were separated approximately by their radius of curvature R. With the help of the translation table, the distance between the mirrors was then adjusted to discrete values d that fulfilled the closure condition

$$d = R\left(1 - \cos\frac{N-2}{2N}\pi\right)$$ where N, the number of passes of the measuring beam inside the cell, was e.g. in the range of 60 to 90.

The concept of the high-temperature multipass cell according to the present invention enables sensitive spectral measurements on gases and vapors at adjustable temperatures in a wide temperature range between room temperature and high temperatures such as 450 °C. Furthermore, optical adjustments, e.g. in order to vary the length of the light path, are possible while the cell is in operation. Once adjustments are made by the operator, thermal expansion is mechanically compensated.

**BRIEF DESCRIPTION OF THE DRAWINGS**

The herein described invention will be more fully understood from the detailed description given herein below and the accompanying drawings which should not be considered limited to the invention described in the appended claims. The figures are showing:

Fig. 1    A high-temperature multipass cell in a first isometric view

Fig. 2    The high-temperature multipass cell according to Fig. 1 in a second perspective view;

Fig. 3    The high-temperature multipass cell according to Fig. 1 in a top view;

Fig. 4    The high-temperature multipass cell in section-view along line DD of Fig. 3;

Fig. 5    Exemplary setups of a high-temperature multipass cell (Table 1);

Fig. 6    A comparison between a measured and a calculated mirror separation in a high-temperature multipass cell;

Fig. 7    Test results of methane in the test chamber of a high-temperature multipass cell.

**DESCRIPTION OF THE EMBODIMENTS**

Although the present invention has been described in relation to particular embodiments thereof, many other variations and modifications and other uses will become apparent to those skilled in the art. It is preferred, therefore, that the present invention be limited not by the specific disclosure herein, but only by the appended claims. The descriptions of the embodiments are general and focus on the concept, rather than the specificity of the prototype designed.

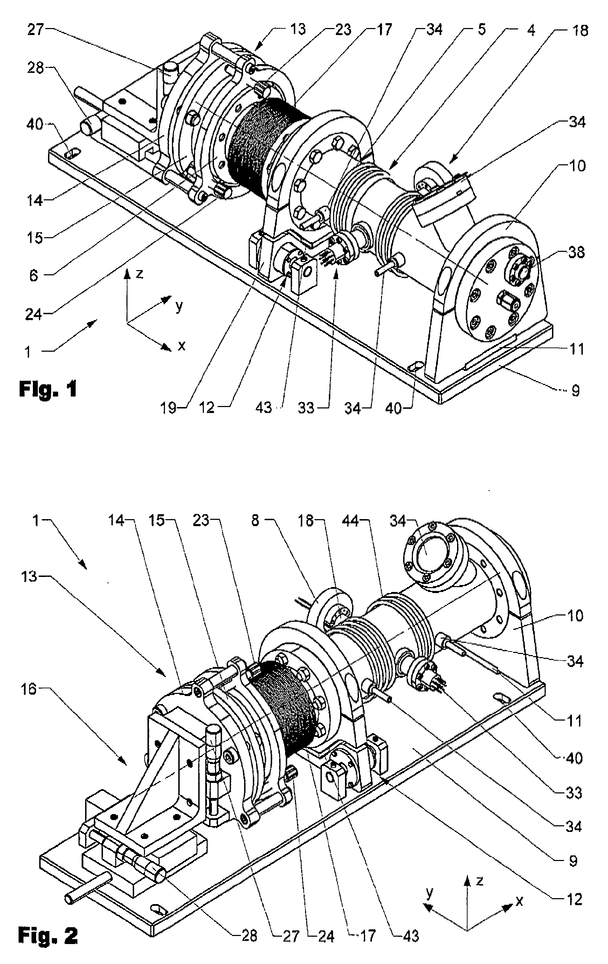

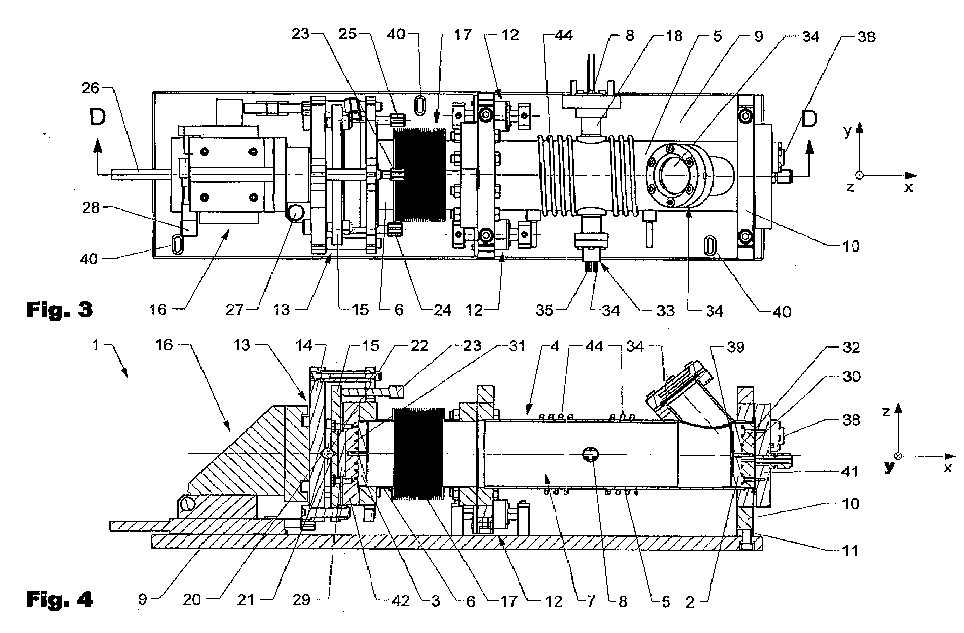

**Figures 1** and **2** are showing a high-temperature multipass cell in a first and a second perspective view from above. **Figure 3** is showing the high-temperature multipass cell in a top view and **Figure 4** is showing the high-temperature multipass cell in a cross-cut along line DD of **Figure 3**.

A high-temperature multipass cell 1 in general comprises a first and a second mirror 2, 3 (see Figure 4) arranged coaxially to an optical axis (x-axis) and facing each other. Depending on the desired optical configuration, the mirrors 2, 3 are spherical or astigmatic. The mirrors 2, 3 are arranged in a housing 4, which is in general tubular and which comprises a first housing part 5 and a second housing part 6 which are sealed on either side by a first and a second end-cap 41,42. The housing 4 encompasses, a heatable and vacuum test chamber 7 in which a probe to be tested can be introduced through fittings 34 or by means of a vessel 8 inserted in an appropriate vessel holder 18, here arranged laterally from the housing 4. In the vessel 8 a solid or liquid probe can be placed. After introducing a probe in the vessel 8, the vessel is inserted into the vessel holder 18 and securely sealed. The vessel 8 may be heated or cooled independently of the rest of the high-temperature multipass cell 1 by appropriate vessel heating means (not shown in detail). The test chamber 7 can be heated directly or indirectly by at least one heating element (not shown in detail). The shown embodiment comprises a housing heating means 44, here in the form of a heating coil, which encompasses the housing 4 on the outside.

The first housing part 5 is in the area where the first mirror 2 is arranged interconnected immobile to a support base 9 via a first stand 10 and a thermal insulation means, here in the form of a ceramic block 11, which thermally separates the housing 4 from the support base 9, At another end, the first housing part 5 is supported via a second stand 19 by two linear bearings 12 on the support base 9, such that movement due to thermal expansion in x-direction is possible. The linear bearings 12, the lubricant of which normally should be kept below a critical temperature and the support base 9 are preferably thermally insulated with respect to the first housing part by means of a ceramic insulator 43,

While the first mirror 2 is arranged immobile, the second mirror 3 is arranged adjustable on a tilt table 13 with a first non-tiltable and a second, with respect to the first, around the y- and z-axis tiltable plate 14, 15. The tilt table 13 is fixed on a linear table 16 such that it can be translated in the x-, y- and z-direction with respect to the support base 9. Thereby it is possible to adjust the relative position of the second mirror 3 with respect to the first mirror 2 from the outside while the cell is in operation. The first and the second housing part 5, 6 are interconnected to each other by a flexible bellows 17 which is capable of withstanding internal or external pressure (vacuum) in the test chamber 7. The bellows 17 balances relative movement due to thermal expansion and/or adjustments of the second with respect to the first housing part 5, 6.

The first and the second tilt plate 14, 15 of the shown embodiment each comprise on the side opposite to each other a groove 20, 21 in which a sphere 22 is arranged which acts as a bearing support of the second tilt plate 15 with respect to the first tilt plate 14. The second tilt plate is pressed against the sphere 22 and the first tilt plate 14 by a first, a second and a third set screw 23, 24, 25 arranged in general equidistant to the sphere 22 and 120° spaced apart with respect to each other. The axes of the set screws are arranged in general perpendicular to the first tilt plate 14 (parallel to x-axis). The tilt table 13 is arranged on the three axis linear table 16, which is arranged on the support base 9 and which is adjustable in x-, y- and z-direction by a fourth, a fifth and a sixth set screw 26; 27, 28 arranged perpendicular to each other. If appropriate the second housing part 6 is thermally insulated from the tilt table and the linear table 13, 16 by an insulator, here in the form of a ceramic disk 29. Therefore a user may perform adjustments by turning the set screws 23, 24, 25, 26, 27, 28 while maintaining the cell at a high temperature.

Behind each mirror 2, 3 a heating element, here in the form of a heating coil 31, 32 is arranged. By this the mirrors 2, 3 can be maintained at a higher temperature than the housing 4, in order to prevent condensation on the optical surface.

The bellows 17 has a double function. Once the distance between the first and the second mirror 2, 3 is adjusted, the bellows 17 compensates thermal expansion. Furthermore, it enables the second mirror 3 to be tilted or translated in any direction, while maintaining the high-temperature multipass cell under vacuum conditions,

Fittings 34 and/or electric feedthroughs 33 are arranged laterally extending from the housing 4. The fittings may be used e.g. to connect a vacuum generating system or may serve as an inlet port. The electric feedthroughs can be used for example to connect temperature and/or pressure and/or humidity sensors placed in the test chamber 7. A viewport 37 offers a line of sight on the optical surface of the fixed mirror 2. This permits an easy alignment, e.g. by observing the beam spots pattern of a visible laser beam on the optical surface of the fixed mirror 2. A coupling window 38 is arranged behind the first mirror 2 and is used to couple an optical beam, e,g, a laser beam or the white source of a Fourier transform infrared spectrometer, in and/or out of the high-temperature multipass cell through a pass-through opening 39 in the fixed mirror 2. The beam is coupled out through the same or a different coupling window 38, respectively pass-through opening 39 after a desired number of passes/reflections are reached.

The base plate 9 of the shown embodiment is made out of aluminum and comprises three slots 40 for mounting of the device 1 on an optical table without distorting the mirror alignment

The parts of the housing are preferably made out of stainless steel, e.g. 316L, for corrosion resistance. Silver coated copper gaskets are preferably used for sealing, Heating of the mirrors 1, 2, the vessel 8 and the rest of the cell is separately controlled by appropriate heating means and/or sensor means.

The described setup of the high-temperature multipass cell enables sensitive infrared spectroscopy of hot gases and condensed compounds in the vapor phase. The maximum operating temperature of a prototype was limited by the glass-to-metal hermetic seals to 450°C. Whereas sapphire can be readily metalized and sealed to vacuum flanges by brazing, most optical materials are not suitable for high temperature joining processes. In those cases, Kalretz® 0-rings may be employed. In spite of performing up to 327 °C only, Kalretz® offers more flexibility in the choice of the window material, antireflection coating and wedge angle.

The high-temperature multipass cell described herein is designed for optical configurations using spherical or astigmatic mirrors, as described by Herriott et al. and McManus et al. (see J. B. McManus, P. L. Kebabian, and W. S. Zahniser, Appl. Opt. 34, 3336, 1995) respectively. With spherical mirrors several stable configurations are possible and the path length is variable by an amount that depends on the travel range of the set screws 26 that governs the mirror spacing. For a given cell volume, the maximum achievable path length of the light is, however, smaller than obtained with astigmatic mirrors.

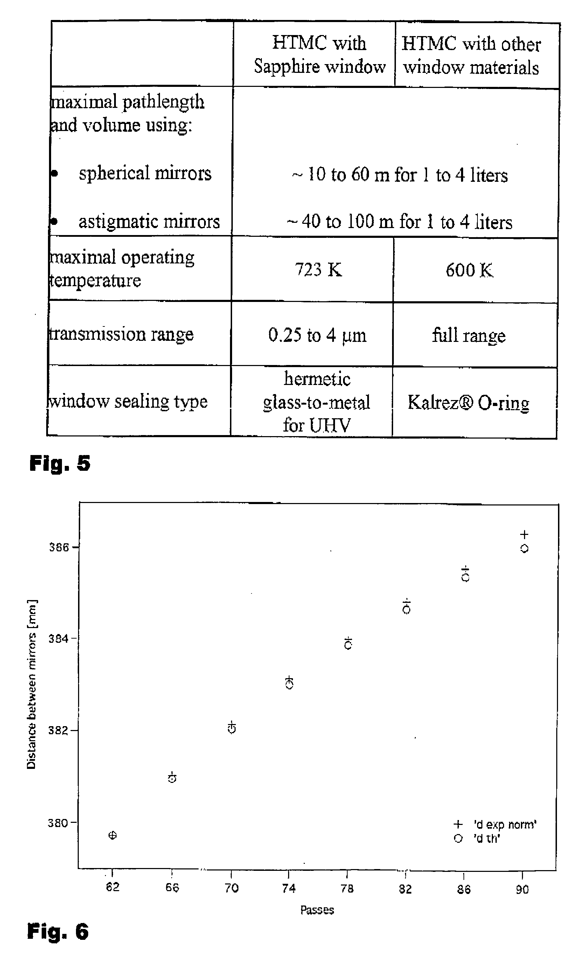

Figure 5 (Table 1) shows exemplary specifications of a high-temperature multipass cell according to the present invention. In an experimental setup a high-temperature multipass cell was assembled in a spherical Herriott configuration with Gold as mirror coating and Sapphire as coupling window material, The cell 1 (see Fig. 1) had a total inner volume of approximately 2 liters, including all fittings and a high temperature resistant pressure transducer. The spherical mirrors 2, 3 had a nominal diameter of 70 mm and a radius of curvature of 400 mm. The path length of the beam in the test chamber 7 could be varied from about 9 m to 35 m. Three temperature controllers powered the mirror heaters 31, 32 and a wire heater arranged around the cell body separately, In this way, the temperature of the cell could be adjusted between room temperature (23° C) and 300°C with an accuracy of 1 °C.

To demonstrate the performance of the high-temperature multipass cell, tests have been conducted on methane ($CH_4$) with a tunable mid-infrared laser source emitting in the fingerprint region between 3.3 $\mu$m and 4 $\mu$m wavelength i.e. in a range between 2500 $cm^{-1}$ and 3000 $cm^{-1}$ wave number. The mid-infrared power entering, respectively exiting the cell was controlled by two room temperature HgCdZnTe-detectors. Absorption inside the test chamber 7 is deduced by comparing the signal given by the two detectors. After each measurement cycle, condensates were captured in a cooling trap prior to evacuating the cell l through a high-vacuum system. Calibration measurements with pure nitrogen (99.999%) were performed before each measurement series. Methane samples came from a certified mixture of 1000 ppm methane diluted in nitrogen.

Figure 6 schematically shows a comparison between a measured and a calculated mirror separation. The experimental error bars, of the order of 100 $\mu$m, depict the amount required to misalign the high-temperature multipass cell completely, The thermal expansion of the housing 4 (see **Figure 4**) of the cell from room temperature (23°C) to 275 °C was approximately 850 micrometers and has been verified by measuring the displacement of the bushings of the linear bearing 12, Therefore, without a compensation mechanism, a fatal misalignment would have occurred when submitting the cell 1 to significant temperature changes.

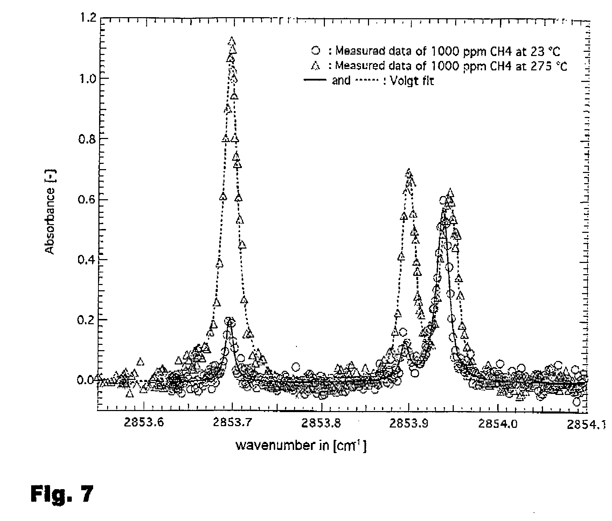

**Figure 7** shows the absorption characteristics of methane in a test chamber 7 of a high-temperature multipass cell according to the present invention (see **Figure 4**). It clearly evidences the different effects of temperature on line strength in a spectral range free from interferences with strong water absorption lines, The cell was filled at room temperature with 1000 ppm methane buffered in nitrogen up to a total pressure of 100 mbar. A measurement was then performed at room temperature and at 275 °C, using the same gas sample, thus keeping the methane concentration constant. In agreement with Hitran predictions (see L. S. Rothman et al., J. Quant. Spectrosc. Radiat. Transf. 96, 139; 2005), the lines at 2853.70 $cm^{-1}$ and 2853.90 $cm^{-1}$ - originating from hot bands - increase their strength, while the line at 2853.94 $cm^{-1}$ is expected to decrease in strength as a result of ground state depopulation at high temperatures. In fact, it remains constant due to an overlap with nearby weak lines whose strength increase with temperature. The line profiles were best fitted with Voigt convolutions, because they are pressure-broadened and Doppler-broadened under our reduced pressure conditions.

The presented measurements demonstrate the feasibility of high-temperature experimental investigations of gases and vapors with long path length systems. A whole new range of weak hot band transitions becomes accessible using a HTMC at elevated temperatures, Besides the determination of line strengths, high-temperature measurements give the opportunity, in high-resolution spectroscopy, to study the temperature dependence of pressure-induced line broadening and line shifts. Measurements at different temperatures can also facilitate line assignments, Such measurements are welcome to improve current databases, which often rely on semi-empirical data for hot band predictions. This would in turn provide valuable information to the astronomical community, particularly in connection with atmospherical studies of Venus or extra solar planets.

A HTMC would also have a number of applications in environmental sciences. In a waste incinerator for example, trace gases must be monitored in an environment consisting typically of 15% water vapor at 600 K and 1 atm. Other harsh environments requiring a cell that can with stand elevated temperatures can be found in aircraft turbine gas exhausts. Industrial applications are also conceivable. Whether in a petrochemical plant, a gas turbine, a combustion engine or a fuel cell, there are many processes that require robust analytical instruments. In the semiconductor manufacture industry, the moisture background level is one of the main limitations of current analytical systems employing multipass cells, because water quite strongly absorbs on metallic surfaces at room temperature. In the food industry, infrared spectral analysis of liquid fats, oils or beverages is a widespread technique. Despite its successes, the full discriminatory potential of infrared spectroscopy is of the hindered by the fact that liquids present broad spectral features. An interesting outcome of a HTMC would be to achieve better selectivity by performing measurements on evaporated samples instead, which are expected to deliver sharper absorption lines at low pressures. In forensic sciences, the same considerations apply for the analysis of liquid urine and blood samples.

**Claims**

1. Multipass cell (1) suitable for absorption spectroscopy comprising a first mirror (2) and a second mirror (3), arranged in a housing (4) and in general facing each other coaxially to an optical axis (x-axis) and mechanically interconnected to and thermally insulated from a base support (9), whereby said second mirror (3) is arranged adjustable with respect to said first mirror (2) by adjusting means (13, 16) to adjust beam reflection and compensate thermal expansion of the housing (4).

2. The multipass cell (1) according to claim 1, **characterized in that** the mirrors (2, 3) are thermally interconnected to the housing (4) to avoid cold spots.

3. The multipass cell (1) according to one of the previous claims, **characterized in that** the housing (4) and/or the mirrors (2, 3) are heatable by at least one heating means (31,32,44).

4. The multipass cell (1) according to one of the previous claims, **characterized in that** the first and the second mirror (2, 3) are arranged inside a housing (4) comprising a first and a second housing part (5, 6) adjustably interconnected to each other by a flexible bellows (17).

5. The multipass cell (1) according to claim 4, **characterized in that** the flexible bellows (17) is in general ring shaped and has a fanfold cross-section.

6. The multipass cell (1) according to one of the claims 4 or 5, **characterized in that** the bellows (17) consists out of sheet metal.

7. The multipass cell (1) according to claim 6, **characterized in that** the bellows is made out of steel or titanium.

8. The multipass cell (1) according to one of the claims 4 to 7, **characterized in that** the first housing part (5) is in the area of the first mirror (2), mounted on one end immovable on the support base (9) via a first stand (10) and supported at the other end linearly displaceable in the direction of the optical axis (x-axis) by a second stand (19) and a linear bearing (12).

9. The multipass cell (1) according to one of the previous claims, **characterized in that** the second mirror (3) is interconnected to the base support (9) by a tilt table (13) and/or a linear table (16).

10. The multipass cell (1) according to claim 9, **characterized in that** the second housing part (6) is arranged on the tilt table (13) and/or the linear table (6).

11. The multipass cell (1) according to one of the previous claims, **characterized in that** the housing (7) comprises fittings (34) to apply a vacuum and/or at least one heating means (31, 32) to heat the inside of the housing and/or at least one mirror (2, 3),

12. The multipass cell (1) according to one of the previous claims, **characterized in that** the housing (4) is thermally insulated by a thermal insulator (11, 29) with respect to the support base (9) and/or the adjusting means (13, 16).

13. The multipass cell (1) according to claim 12, **characterized in that** the thermal insulator are made out of ceramic.

14. The multipass cell (1) according to one of the previous claims, **characterized in that** the mirrors are exchangeable.

15. The multipass cell (1) according to one of the previous claims, **characterized in that** the mirrors are made out of synthetic fused silica and/or invar,

16. The multipass cell (1) according to one of the previous claims, **characterized in that** the housing (4) comprises a viewport (37) for visual control of beam pattern.

**Fig. 1**

**Fig. 2**

Fig. 3

Fig. 4

| | HTMC with Sapphire window | HTMC with other window materials |
|---|---|---|
| maximal pathlength and volume using: <br><br> • spherical mirrors <br><br> • astigmatic mirrors | ~ 10 to 60 m for 1 to 4 liters <br><br> ~ 40 to 100 m for 1 to 4 liters | |
| maximal operating temperature | 723 K | 600 K |
| transmission range | 0.25 to 4 μm | full range |
| window sealing type | hermetic glass-to-metal for UHV | Kalrez® O-ring |

## Fig. 5

Fig. 6

Fig. 7

**EP 1 860 425 A1**

**European Patent Office**

## EUROPEAN SEARCH REPORT

Application Number

EP 06 01 0623

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 09 005232 A (MITSUBISHI HEAVY IND LTD) 10 January 1997 (1997-01-10)<br><br>* abstract *<br>* paragraphs [0001], [0008], [0009]; figure 1 *<br>----- | 1,2,4-16<br><br>3 | INV.<br>G01N21/03<br><br>ADD.<br>G01N21/09 |
| Y | US 4 749 276 A (BRAGG SUSAN L [US] ET AL) 7 June 1988 (1988-06-07)<br>* column 1, lines 30-47 *<br>* column 3, lines 9-21 *<br>* column 4, lines 40-55 *<br>* column 5, lines 16-30 *<br>----- | 3 | |
| A | JP 56 066735 A (ANRITSU ELECTRIC CO LTD) 5 June 1981 (1981-06-05)<br>* abstract *<br>----- | 1 | |
| A | DE 30 14 248 A1 (BODENSEEWERK GEOSYSTEM GMBH [DE]) 15 October 1981 (1981-10-15)<br>* page 7, line 22 - page 8, line 10 *<br>* page 10, line 31 - page 11, line 20 *<br>----- | 1 | TECHNICAL FIELDS SEARCHED (IPC)<br><br>G01N |

The present search report has been drawn up for all claims

| Place of search | Date of completion of the search | Examiner |
|---|---|---|
| Berlin | 16 November 2006 | NAVAS MONTERO, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 0623

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2006

| Patent document cited in search report | | Publication date | Patent family member(s) | Publication date |
|---|---|---|---|---|
| JP 9005232 | A | 10-01-1997 | NONE | |
| US 4749276 | A | 07-06-1988 | NONE | |
| JP 56066735 | A | 05-06-1981 | NONE | |
| DE 3014248 | A1 | 15-10-1981 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004090628 A
- CN 1659428
- US 2004004720 A
- WO 9749983 A
- WO 9749979 A
- US 2003063284 A
- EP 0768525 A
- US 5949537 A
- US 6188475 B

- US 5351120 A
- US 5303080 A
- US 5383168 A
- US 503080 A
- US 5291265 A
- US 5306918 A
- WO 9117429 A
- US 3711708 A

**Non-patent literature cited in the description**

- **J. B. MCMANUS ; P. L. KEBABIAN ; W. S. ZAHNISER.** *Appl. Opt.,* 1995, vol. 34, 3336
- **L. S. ROTHMAN et al.** *J. Quant. Spectrosc. Radiat. Transf.,* 2005, vol. 96, 139